Europäisches Patentamt

European Patent Office

Office européen des brevets

(19)

(11) Veröffentlichungsnummer: **0 194 498**
**B1**

(12) **EUROPÄISCHE PATENTSCHRIFT**

(45) Veröffentlichungstag der Patentschrift:
26.07.89

(51) Int. Cl.⁴: **B65G 53/30**

(21) Anmeldenummer: 86102398.4

(22) Anmeldetag: 25.02.86

(54) Verfahren und Vorrichtung zum hydraulischen Fördern eines Gemisches aus festen Materialkörnern und Flüssigkeit.

(30) Priorität: 27.02.85 HU 71385

(43) Veröffentlichungstag der Anmeldung:
17.09.86 Patentblatt 86/38

(45) Bekanntmachung des Hinweises auf die Patenterteilung:
26.07.89 Patentblatt 89/30

(84) Benannte Vertragsstaaten:
AT BE CH DE FR GB IT LI LU NL SE

(56) Entgegenhaltungen:
DE-B- 2 457 943
DE-C- 928 153
FR-A- 1 183 172

(73) Patentinhaber: Mélyépitési Tervezö Vállalat, Vigado tér 1, H-1051 Budapest(HU)

(72) Erfinder: Herberth, Attila, Dipl.-Ing., Gyarmat u. 101/b, H-1147 Budapest(HU)
Erfinder: Hertelendi, Miklós, Dipl.-Ing., Kelenhegyi ut 8, H-1118 Budapest(HU)
Erfinder: Kaló, György, Dipl.-Tech., Zalka Máté u. 11, H-3300 Eger(HU)
Erfinder: Kovács, György, Dipl.-Ing., Kapy u. 49, H-1025 Budapest(HU)
Erfinder: Szivák, Attila, Dipl.-Ing., Mártirok utja 64/b, H-1028 Budapest(HU)
Erfinder: Tarbay, Jószef, Dipl.-Ing., Kassák L. u 70, H-1134 Budapest(HU)
Erfinder: Tököli, Miklós, Dipl.-Ing., Somlói u. 27, H-1213 Budapest(HU)

(74) Vertreter: Patentanwälte Viering & Jentschura, Steinsdorfstrasse 6, D-8000 München 22(DE)

**Beschreibung**

Die Erfindung betrifft ein Verfahren und eine Vorrichtung zum hydraulischen Fördern eines Gemisches aus festen Materialkörnern und Flüssigkeit.

Zahlreiche Versionen von zum Fördern eines Gemisches aus festen Materialkörnern und Flüssigkeit in Rohrleitungen dienenden hydraulischen Materialförderanlagen sind bekannt.

Die auf dem System des Trübepumpens beruhende hydraulische Förderanlage kann als die einfachste Lösung betrachtet werden, in der das Gemisch durch die sich drehenden Teile der Trübepumpe strömt, wodurch die zur Strömung des Gemisches erforderliche kinetische Energie unmittelbar von der Trübepumpe geliefert wird. Die Trübepumpen können in einer Parallelschaltung oder in Reihe geschaltet angeordnet werden, auf diese Weise kann unter Anwendung der Trübepumpen eine als Rohrleitung ausgestaltete Förderanlage l/s. mit hoher Leistung und zum Fernfördern ausgebaut werden.

Gegenüber dem auf der Trübepumpe beruhenden System stellen die auf dem System der Dosierkammer beruhenden hydraulischen Förderanlagen eine weiterentwickelte und wirtschaftlichere Lösung dar. Die zum Strömen des Gemisches erforderliche kinetische Energie wird durch das Pumpen der reinen Flüssigkeit geliefert, wobei den Dosierkammern die Aufgabe zugeteilt wird, dem in die Dosierkammer eingefüllten, unter atmosphärischen oder Niederdruck stehenden zum Strömen des Gemisches erforderlichen Druck der reinen Flüssigkeit zu übermitteln. Aus diesem Grunde müssen die Dosierkammern so konstruiert und mit solchen Armaturen versehen werden, daß die Bedingungen der "Druckübermittlung", mit anderen Worten "der Dosierungsfunktion" gewährleistet sind.

Es sind sogenannte Behälter-Dosiervorrichtungen bekannt, die - je nach dem konstruktiven Aufbau der Dosierkammern - aus einem oder zwei kleineren oder größeren (50 bis 200 m³) zylindrischen geschlossenen, unter Druck stehenden Behältern mit ungeteiltem Rauminhalt ausgebildet sind, oder aus zwei oder drei 50 bis 400 m langen abschließbaren Rohrleitungen - ebenfalls mit ungeteiltem Rauminhalt - bestehen und als Rohrkammer-Dosiervorrichtungen bekannt sind; es sind ebenfalls 50 bis 400 m lange Dosiervorrichtungen mit Verdichtungskammer bekannt, die aus einer Rohrleitung mit in zwei Teile geteiltem Innenraum ausgebildet sind.

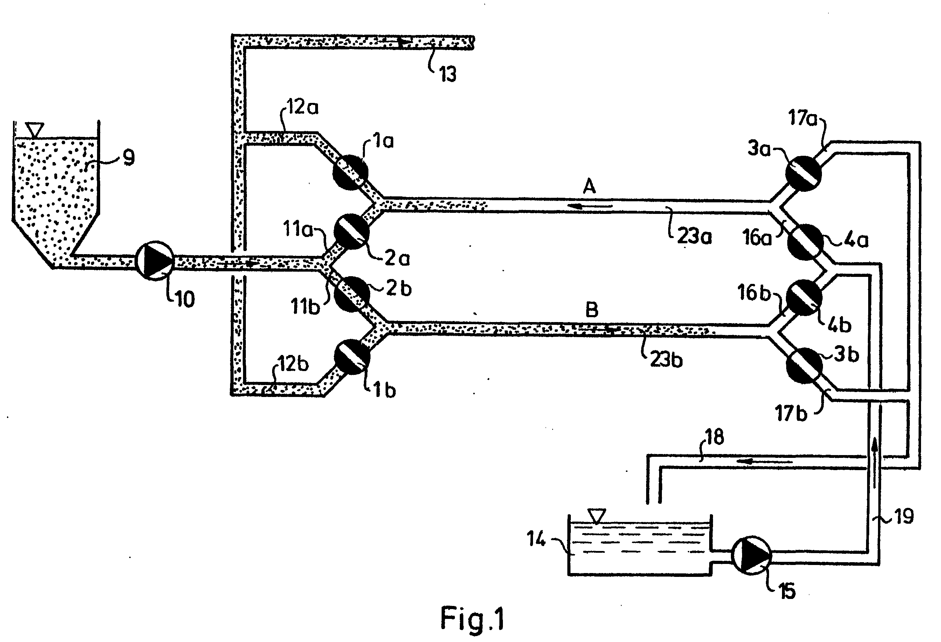

Die Resultate der vergangenen Jahrzehnte haben gezeigt, daß insbesondere auf dem System der Rohrkammer und der Verdichtungskammer beruhende Förderanlagen gebaut worden sind; im Hinblick darauf, daß unsere Erfindung grundsätzlich als eine weiterentwickelte Form dieser Lösungen betrachtet werden kann, werden wir zum Vorstellen des Stands der Technik zu der Erfindung zuerst kurz - später im Zusammenhang mit den Fig. 1 bis 4 ausführlicher - die Entwicklung der auf dem System der Rohrkammer und Verdichtungskammer beruhenden hydraulischen Förderanlagen und den Zusammenhang mit der erfindungsgemäßen Lösung beschreiben.

Der Grundgedanke der Dosieranlage mit Rohrkammer ist zuerst in dem 1952 angemeldeten Patent von E.H. Reichl und S.A. Jones (US-A 2, 485,208 und DE-B 928 153) zu finden. Diese Anlage weist einen Gemischsammelbehälter, ein Flüssigkeitsspeicherbecken und wenigstens eine Dosierkammer auf. Die Dosierkammer ist über Anschlußleitungen und die eingebauten Verschlußorgane mit der am Gemischsammelbehälter angeschlossenen Trübefüllpumpe, mit der an dem Flüssigkeitsspeicherbecken angeschlossenen, entleerenden und fördernden Flüssigkeitspumpe bzw. unmittelbar mit dem Flüssigkeitsspeicherbecken, desweiteren mit einer das Gemisch fördernden Rohrleitung verbunden. Die Kontinuität des entleerenden-fördernden Flüssigkeitsstroms wird mit Hilfe einer Zweikammer-Vorrichtung sichergestellt, während die kontinuierliche Füllströmung mittels einer Dreikammer-Vorrichtung gewährleistet wird. Bei dieser Lösung erfüllt die Rohrkammer lediglich eine "Dosierfunktion", die durch die Betätigung der in den Anschlußleitungen eingebauten Absperrorgane in der entsprechenden Reihenfolge realisiert wird.

Das ungarische Patent HU-A 160 526 stellt eine Weiterentwicklung der Reichl-Jonesschen Dosieranlage mit der Rohrkammer dar, im Sinne deren die Dosierkammer auch über die die in den Anschlußleitungen vorhandenen Absperrorgane umgehenden By-pass-Leitungen mit kleinerem Durchmesser und über die sich darin befindenden kleiner dimensionierten Absperrorgane mit der entleerenden-fördernden Flüssigkeitspumpe bzw. mit der Auslaufleitung verbunden sind. Im Verlaufe des Betriebs der Anlage werden beim Wechseln der Rohrkammer zunächst die Druckunterschiede über die kleineren Absperrorgane ausgeglichen und erst danach werden die in den Anschlußleitungen eingebauten Absperrorgane betätigt. Diese Lösung beseitigt die sich aus dem Druckunterschied ergebenden schädlichen Kraftwirkungen, aber die "Dosierungsfunktion" wird dadurch nicht geändet.

Das in dem ungarischen Patent HU-A 176 878 konzipierte, und mit einer Kurzbenennung definierte "Verfahren unter Anwendung von Verdichtungskammern" ändert die Funktion der Dosierkammer. Das Wesentliche des Verfahrens besteht darin, daß die frühere, nur auf die Dosierung gerichtete Funktion der Dosierkammern durch eine sogenannte "Verdichtungsfunktion" ergänzt worden ist, wobei die beiden Funktionen - nämlich Dosierung und Verdichtung - gleichzeitig, in ein und demselben Raum, in einem wenigstens teilweise mit einer Filterfläche ausgestalteten Dosierraum realisiert werden, wobei die in dem Gemisch enthaltene Flüssigkeitsmenge mit Hilfe des Druckes der zu der Anlage gehörenden Trübefüllpumpe bzw. der entleerenden-fördernden Flüssigkeitspumpe reduziert wird. Der von dem Dosierraum über eine Filterfläche getrennte, das Filtrat aufnehmende Flüssigkeitsraum ist über die mit Absperrorganen versehenen Leitungen mit kleinem Durchmesser, mit der entleerenden-fördernden Flüssigkeitspumpe bzw. mit dem Flüssigkeitsspeicherbecken verbunden. Die in der Leitung mit dem kleinen Durchmesser eingebauten Absperrorgane übernehmen gleichzeitig den Druckausgleich.

Das Verfahren mit der Verdichtungkammer bezieht mehrere hydraulische Förderanlagen ein (ungarisches Patent HU-A 176 878, sowie Patentanmeldungen in Ungarn AA-894, 3595/84 und 3673/84). Zur Realisierung des gleichen Verfahrens besteht die gemeinsame Charakteristik in der Unterteilung der Dosierkammern in einen Dosierraum und einen Flüssigkeitsraum; der Unterschied zeigt sich in verschiedenen Ausführungsformen für das Füllen des Dosierraumes bzw. in der Beseitigung des an der Filterfläche abgelagerten Materials bzw. in dem Ausgleich des Druckunterschieds bei dem Füllen und Entleeren.

Der Erfindung wurde das Ziel gesetzt , ein Verfahren und eine Anlage zum hydraulischen Fördern eines aus festen Materialkörnern und Flüssigkeit bestehenden Gemisches, und zwar unter Aufrechterhaltung der Vorteile der bisher entwickelten Ausführungsformen und Beseitigung von deren Nachteilen, bzw. den konstruktiven Aufbau und Betrieb der hydraulischen Förderanlagen weiterzuentwickeln.

Die Erfindung beruht auf den folgenden Erkenntnissen:

Vor dem Weckseln der Dosierkammer reicht es nicht aus, die Differenz zwischen dem Entleerungsdruck oder dem Ausflußdruck und dem in dem Dosierraum herrschenden Druck auszugleichen. Der mehrach ausgeglichene Betrieb der großdimensionierten hydraulischen Förderanlagen beansprucht auch den Ausgleich der geringeren Durckunterschiede, noch bevor die Dosierkammer unter Förderdruck oder Fülldruck gesetzt wird. Dieser Anspruch ist bei Anlagen mit größerem Durchmesser unvermeidlich, da sich hier größere Massen von Flüssigkeiten und Gemischen treffen; so müssen die nötigen Maßnahmen getroffen werden, um auch bei niedrigeren Druckunterschieden größere Kraftwirkungen vermeiden zu können.

Bei den Absperrarmaturen mit dem traditionellen Keil- oder Plattenverschluß in Rohrleitungen mit größerem Durchmesser findet die Zunahme des Öffnungsquerschnitts auch bei einer kleineren Bewegung, sich aus der Konstruktion der Absperrorgane ergebend äußerst schnell statt. Eben deshalb ist es wünschenswert, ein solches Absperrorgan zu verwenden, bei dem im Verlauf des Öffnungsvorganges der Querschnitt - sich den jeweiligen Forderungen anpassend - allmählich, unabhängig von dem Durchmesser der Rohrleitung vergrößert werden kann.

Werden nun drei Dosierkammern verwendet, müssen wegen des Füllstroms und des Förderstroms die Absperrorgane zweier Dosierkammern immer geöffnet sein. In der Periode des Dosierkammerwechsels müssen zwei Dosierräume mit dem unter demselben Druck stehenden Raum provisorisch verbunden werden, damit die Kontinuität des Füll- oder Förderstromes aufrechterhalten bleibt. Demnach ist es wünschenswert, ein zum dreiwegigen Durchgang geeignetes Absperrorgan - ein Strömungsumstellorgan- zu schaffen, das in der einen Durchführungsrichtung nicht abgeschlossen werden kann, gleichzeitig aber dazu geeignet ist, gleichzeitig auch zwei Dosierräume über eine Öffnung mit einer verkleinerten Durchführungsfläche zu verbinden.

Im Sinne der Erfindung wird die gestellte Aufgabe unter Anwendung eines Verfahrens gelöst, in dessen Verlauf in der über Räume mit Fülldruck, Förderdruck, Entleerungsdruck und Ausflußdruck verfügenden und mit drei Dosierräumen versehenen hydraulischen Förderanlage nach erfolgtem Druckausgleich der Raum unter Fülldruck mit dem Raum unter Ausflußdruck, der Raum unter Entleerungsdruck mit dem Raum unter Förderdruck über die drei Dosierräume in bestimmter Reihenfolge verbunden werden, während in den Dosierraum unter Fülldruck das Gemisch eingefüllt wird, wonach das Gemisch unter Entleerungsdruck in die Förderleitung weitergeleitet wird. Der Ausgleich des Druckunterschieds zwischen den Dosieräumen, den unter Fülldruck, Förderdruck, Ausflußdruck und Entleerungsdruck stehenden Räumen, sowie die Verbindung der unter Fülldruck, Förderdruck, Ausflußdruck und Entleerungsdruck stehenden Räume mit den Dosierräumen erfolgen druch die vorzugsweise einsinnige und mit veränderlicher Geschwindigkeit durchgeführte Drehbetätigung des Strömungsumstellorgans, das die Räume unter Fülldruck, Förderdruck, Entleerungsdruck und Ausflußdruck einzeln und gleichzeitig mit einem oder zwei Dosierräumen verbindet.

Im Sinne des Verfahrens werden - noch bevor die Gemischströmungen in den Dosierkammern in Gang gesetzt werden - in den Dosierkammern und in den sich anschließenden vier verschiedenen Räumen - in der Druckleitung der Trübefüllpumpe, in der Startleitung der Förderrohrleitung, in der Druckleitung der entleerenden und fördernden Flüssigkeitspumpe, sowie in der Ausflußleitung - die dort herrschenden Drücke ausgeglichen.

Es ist nicht erforderlich, zum Ausgleich des Druckes einen selbständigen Arbeitsgang einzufügen, der Druck wird während der Drehung des inneren Teils der Strömungsumschaltorgane ausgeglichen. Die veränderliche Drehbewegung innerhalb der unter Druck stehenden Räume ist unerläßlich, damit in den vier Räumen, zum Ausgleich der verschiedenen Druckunterschiede unterschiedliche Zeitspannen zur Verfügung stehen. Die obenerwähnten sind insbesondere bei hydraulischen Förderanlagen, die mit Rohrleitungen mit großem Durchmesser und Absperrarmaturen mit großem Durchmeser ausgestaltet sind, wo kleinere und größere Druckunterschiede auszugleichen sind, und so die Dauer des Arbeitsgangs zu ändern ist, von äußerster Wichtigkeit.

Während die obenerwähnten vier sich anschließenden Räume mit den Dosierräumen verbunden werden, gelangt der eine unter Druck stehende Raum in eine Zwangsverbindung mit dem einen Dosierraum. Am Anfang der Zwangsverbindung findet der Druckausgleich statt, und wenn der Arbeitsgang fortgesetzt wird, kommt die Verbindung mit vollem Querschnitt zustande; auf diese Weise schafft der eine Dosierraum die Verbindung zwischen dem Druckraum der Trübefüllpumpe und dem Flüssigkeitsspeicherbecken, während der andere Dosierraum die entleerende und fördernde Flüssigkeitspumpe mit der Förderrohrleitung verbindet.

In der erfindungsgemäßen Anlage ist die Druckseite der mit ihrer Saugseite an dem Gemischsammelbehälter angeschlossenen Trübefüllpumpe über die auffüllende Druckleitung, drei Dosierräume und die Ausflußleitung mit dem Flüssigkeitsspeicherbecken verbunden, während die Druckseite der mit ihrer Saugseite an das Flüssigkeitsspeicherbecken angeschlossenen, entleerenden--fördernden Flüssigkeitspumpe über die entleerende Druckleitung und über die Dosierräume mit der das Gemisch fördernden Rohrleitung verbunden ist. Das Wesentliche der Anlage besteht darin, daß zwischen der auffüllenden Druckleitung, der das Gemisch fördernden Rohrleitung, der Ausflußleitung und der entleerenden Druckleitung, sowie zwischen den Dosierräumen je ein über drei Umschaltungsmöglichkeiten verfügendes, vorzugsweise in nur einer Richtung drehbares Strömungsumstellorgan eingebaut ist, das die auffüllende Druckleitung, die das Gemisch fördernde Rohrleitung, die Ausflußleitung bzw. die entleerende Druckleitung einzeln und gleichzeitig mit einem oder zwei Dosierräumen verbinden.

Vorteilhaft ist an dem Mantel des zylindrischen Innenteils des über drei Umschaltungsmöglichkeiten verfügenden Strömungsumstellorgans eine so große Öffnung vorgesehen, die es ermöglicht, daß der Innenraum des Innenteils mit einem der drei Dosierräume kommunizieren und gleichzeitig aber von den anderen beiden Dosierräumen getrennt werden kann. Es besteht aber auch die Möglichkeit, den Innenraum mit zwei Dosierräumen gleichzeitig zu verbinden und gleichzeitig von dem dritten zu isolieren.

Es ist als vorteilhaft zu betrachten, wenn an dem Mantel des inneren zylindrischen Teils des Strömungsumschaltorgans an dem in der Drehrichtung liegenden Flansch der Öffnung ein Spalt oder ein im Vergleich zu der Öffnung kleindimensioniertes Loch ausgestaltet ist.

Es ist weiterhin vorteilhaft, wenn das über drei Umschaltmöglichkeiten verfügende Strömungsumschaltorgan mit Hilfe eines Getriebes mit veränderlicher Drehzahl in einer Richtung gedreht wird, das von einer zentralen Steuer- und Regeleinheit her gesteuert wird.

Das erfindungsgemäße Verfahren bzw. die zur Durchführung dienende hydraulische Förderanlage können mit einer durch eine Filterfläche geteilten Dosierkammer oder ohne Filterfläche realisiert werden, auch wenn es sich um eine einwegige oder im Gegenstrom arbeitende Förderanlage handelt. Die Anlage kann auf einen Schwimmbagger montiert werden, eine bewegbare Ausführung ist auch möglich, wobei kürzere oder längere Dosierkammern ausgestaltet werden.

Der Erfindungsgegenstand, sowie die wichtigeren bekannten Lösungen werden anhand einiger Ausführungsbeispiele mit Hilfe der beiliegenden Zeichnungen näher erläutert.

Es zeigen:

Fig. I Eine bekannte, auf dem Rohrkammersystem beruhende Reichl-Jonessche hydraulische Förderanlage mit zwei Kammern,

Fig.2 eine bekannte, auf dem Dosiersystem beruhende hydraulische Förderanlage mit drei Kammern,

Fig. 3 eine frühere Ausführungsform der hydraulischen Förderanlage mit Verdichtungskammer,

Fig. 4 eine frühere Ausführungsform der hydraulischen Förderanlage mit Verdichtungskammer und Kammerverschluß,

Fig. 5 ein Ausführungsbeispiel der erfindungsgemäßen Dreikammeranlage,

Fig. 6 die erfindungsgemäße Anlage mit Verdichtungskammer,

Fig. 7 den Längsschnitt einer möglichen Ausfürungsform des Strömungsumschaltorgans,

Fig. 8 den Querschnitt des Strömungsumschaltorgans nach Fig. 7,

Fig. 9 den Querschnitt nach Fig. 8 mit demgegenüber verdrehtem inneren Teil,

Fig. 10 einen Teil einer weiteren Ausführungsform des Strömungsumschaltorgans, im Längsschnitt dargestellt,

Fig. 11-14 die Position der Strömungsumschaltorgane in dem Zustand nach Fig. 5 und 6.

Konstructive Charakteristiken der Reichl-Jonesschen hydraulischen Förderanlage mit der Rohrkammer sind in Fig. 1 anhand einer Zweikammer-Anlage veranschaulicht. Die Grundelemente der Anlage sind ein Gemischsammelbehälter 9, eine Trübefüllpumpe 10, die das Gemisch von dem Gemischsammelbehälter 9 in Dosierkammern A, B einfüllt, ein Flüssigkeitsspeicherbecken 14 und eine entleerende-fördernde Flüssigkeitspumpe 15, die das Gemisch mitsamt der aus dem Flüssigkeitsspeicherbecken 14 abgesaugten Flüssigkeit aus den Dosierkammern A, B entleert und in die das Gemisch fördernde Rohrleitung einpreßt. Die Dosierkammern A, B sind eigentlich zwei 50 bis 400 m lange Rohrleitungen, die über Anschlußleitungen 11a, 11b, 12a, 12b, 16a, 16b, 17a, 17b mit der Trübefüllpumpe 10, über eine Druckleitung 19 mit der entleerenden-fördernden Flüssigkeitspumpe 15, mit einer das Gemisch fördernden Rohrleitung 13 und über eine Ausflußleitung 18 mit dem Flüssigkeitsspeicherbecken 14 verbunden sind. Je Rohrkammer sind vier Absperrorgane 1a - 4a bzw. 1b - 4b in den Anschlußleitungen 11a, 11b, 12a, 12b, 16a, 16b, 17a, 17b eingebaut, die das Volumen eines Dosierraumes 23a bzw. 23b bestimmen. Die Operationen der in dem Fördersystem eingebauten Pumpen, Absperrorgane und elektrischer Vorrichtungen werden von einer Steueranlage her gesteuert.

Die Wirkungsweise der bekannten Anlage nach Fig. 1 ist wie folgt:

In der dargestellten Position steht die Dosierkammer A unter Entleerung, während die Dosierkammer B eben aufgefüllt wird. Die Trübefüllpumpe 10 saugt das Gemisch vorgegebener Zusammensetzung aus dem Gemischsammelbehälter 9 an und preßt es über das geöffnete Absperrorgan 2b der Anschlußleitung 11b in den Dosierraum 23b der Dosierkammer B ein, wodurch diese mit dem Gemisch aufgefüllt wird. Das einströmende Gemisch verdrängt die sich in dem Dosierraum 23b befindende Flüssigkeit über das geöffnete Absperrorgan 3b der Anschlußleitung 17b in das Flüssigkeitsspeicherbecken 14. Während die entleerende-fördernde Flüssigkeitspumpe 15 die in dem Flüssigkeitssppeicherbecken 14 vorhandene Flüssigkeit über das geöffnete Absperrorgan 4a der Anschlußleitung 16a der Dosierkammer A in den Dosierraum 23a preßt, entleert die Flüssigkeit das sich in dem Dosierraum 23a befindende Gemisch über das geöffnete Absperrorgan 1a der Anschlußleitung 12a und verdrängt es in die das Gemisch fördernde Rohrleitung 13.

Nach efolgter Entleerung des Dosierraumes 23a und Auffüllung des Dosierraums 23b beginnt die Steuervorrichtung die Absperrorgane 1a - 4a, 1b - 4b in der angegebenen Reihenfolge zu betätigen; nach der Beendigung der Verschluß- und Öffnungsoperationen beginnt die Trübefüllpumpe 10 den Dosierraum 23a aufzufüllen, während die entleerende-fördernde Flüssigkeitspumpe 15 die Entleerung des Dosierraumes 23b in Gang setzt.

Die Reihenfolge der schließenden-öffnenden Operationen der Absperrorgane wird so festgesetzt, daß eine kontinuierliche Gemischströmung in der das Gemisch fördernden Rohrleitung 13 zustandekommt. Um das gesetzte Ziel erreichen zu können, muß die Kontinuität der entleerenden-fördernden Flüssigkeitsströmung sichergestellt sein. Diese Forderung kann in dem System mit den zwei Dosierkammern erst dann erfüllt werden, wenn der Füllstrom in der Wechselperiode der Dosierkammer abgestellt wird.

Demnach ist die Dosierkammer A, B bei der Reichl-Jonesschen Dosiervorrichtung mit der Rohrkammer eine Rohrleitung, deren Dimensionen mit jenen der das Gemisch fördernden Rohrleitung 13 übereinstimmend sind, deren mit den Absperrorganen 1a - 4a bzw. 1b - 4b verschlossener Teil das ungeteilte Volumen - den Dosierraum 23a bzw. 23b - bildet, in dem die Voraussetzungen der Druckübermittlung oder der sogenannten Dosierungsfunktion gewährleistet sind. In diesen Raum strömt das von der Trübefüllpumpe 10 geförderte Gemisch ein, dessen Menge dem Volumen des Dosierraums 23a bzw. 23b entspricht, und hält sich solange hier auf, bis die Steuereinheit diejenigen vorgeschriebenen Arbeitsgänge an den Absperrorganen durchführt, die zum Aufbau des entleerenden und fördernden Druckes und Ingangsetzen des entleerenden Stromes unerläßlich sind und von hier das Gemisch durch den entleerenden-fördernden Druck in die das Gemisch fördernde Rohrleitung 13 drückt. Es ist wohl ersichtlich, daß die Zusammensetzung des in den Dosierraum 23a bzw. 23b eingefüllten Gemisches - hinsichtlich des Verhältnisses zwischen Feststoff und Flüssigkeit - theoretisch weder während der Auffüllung des Dosierraumes, noch während der Verweildauer in dem Dosierraum, noch während dessen Entleerung geändert werden kann.

Aufgrund des Obenangeführten kann daher festgestellt werden, daß in dem Reichl-Joneschen System die Rohrkammern nur eine "Dosierfunktion" erfüllen, wobei diese Funktion - nämlich die Umstellung von einem niedrigeren Fülldruck auf einen höheren Entleerungsdruck und Ingangsetzen der zu der Auffüllung und Entleerung erforderlichen Strömungen - durch die von der Steuereinheit bestimmten Öffnungs- und Verschlußoperationen der in den Anschlußleitungen installierten Absperrorgane sichergestellt wird.

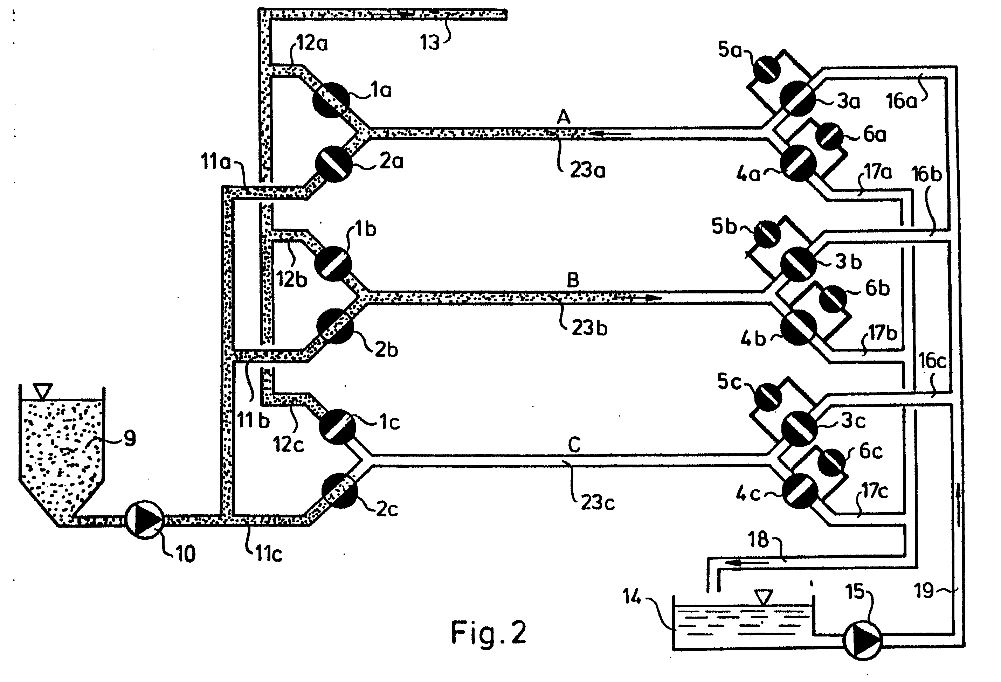

In Fig. 2 ist eine weiterentwickelte, auf dem Dosiersystem beruhende hydraulische Dreikammer-Förderanlage dargestellt. In der hier dargestellten Anlage stehen die Dosierräume 23a - 23c der Dosierkammern A - C über je eine Leitung mit kleinerem Durchmesser in einer direkten Verbindung mit einer entleerenden-fördernden Flüssigkeitspumpe 15 bzw. mit einem Flüssigkeitsspeicherbecken 14, wobei diese Leitungen die in den Anschlußleitungen 16a - 16c bzw. 17a - 17c eingebauten Absperrorgane 3a - 3c bzw. 4a - 4c umgehen und in diese Leitungen mit dem kleineren Druchmesser ist jeweils ebenfalls eine kleiner dimensioniertes Absperrorgan 5a - 5c bzw. 6a - 6c eingebaut. Die drei Dosierkammern ermöglichen auch in der Umstellperiode der Dosierkammern neben der Kontinuität des entleerenden-fördernden Flüssigkeitsstroms auch die Kontinuität des Füllstromes.

In der hier geschilderten Situation steht die Dosierkammer A unter Entleerung, die Dosierkammer B wird eben aufgefüllt, während in der Dosierkammer C die Strömung sich im Stillstand befindet und in dem Dosierraum 23c die entleerende-fördernde Flüssigkeit unter dem Druck der Trübefüllpumpe 10 steht.

Nachdem der Dosierraum 23a der Dosierkammer A entleert und der Dosierraum 23b der Dosierkammer B aufgefüllt worden sind, beginnt die Steuervorrichtung die in den Anschlußleitungen 11a-11c, 12a-12c, 16a-16c, 17a-17c eingebauten Absperrorgane 1a-1c, 2a-2c, 3a-3c, 4a-4c, sowie die in den Leitungen mit dem kleineren Durchmesser installierten Absperrorgane von kleinerer Dimension in de vorgegebenen Reihenfolge zu betätigen; nach der Beendigung der schließenden-öffnenden Arbeitsgänge beginnt die Trübefüllpumpe 10 den Dosierraum 23c der Dosierkammer C mit dem Gemisch aufzufüllen, während die entleerende-fördernde Flüssigkeitspumpe 15 die Entleerung des Dosierraumes 23b der Dosierkammer B in Gang setzt, währenddessen der entleerende-fördernde Flüssigkeitsstrom in dem Dosierraum 23a der Dosierkammer A abgestellt wird.

Die Steuereinheit ist so zu programmieren, daß während der Umstellung (des Wechsels) der Rohrkammern, der Betätigung der Absperrorgane 1a-1c, 2a-2c, 3a-3c, 4a-4c vorangehend - d.h. noch bevor die Strömungen in den Dosierräumen 23a-23c in Gang gesetzt werden - die Druckunterschiede unter Einschaltung der kleiner dimensionierten Absperrorgane 5a-5c, 6a-6c in dem erforderlichen Maß ausgeglichen werden, wonach die Absperrogane 1a-1c, 2a-2c, 3a-3c, 4a-4c programmgerecht in einer Reihenfolge betätigt werden, die die Kontinuität der Füllströmung und der entleerenden-fördernden Strömung gewährleistet.

Zur Steuerung und Betätigung der Absperrorgane, d.h. zu deren Schließen und Öffnen, lieferte die Praxis mehrere Lösungen.

Aus dem Gesagten geht eindeutig hervor, daß die erwähnten Ergänzungen weder den konstruktiven Aufbau der Dosierkammern A, B, C noch den Rauminhalt der Dosierräume 23a-23c oder deren Funktion verändern, sondern lediglich die Möglichkeit dazu bieten, daß der Unterschied zwischen dem Fülldruck und dem Entleerungs-Förderdruck - noch dem Ingangsetzen der auffüllenden und entleerenden-fördernden Strömungen vorangehend - über die Leitungen mit kleinem Durchmesser ausgeglichen werden können, wodurch in der ganzen hydraulischen Förderanlage die sich aus dem Ruckunterschied ergebenden unerwünschten Kraftwirkungen aufhören; desweitern wird es ermöglicht, durch die kontinuierliche Füllströmung die Wirtschaftlichkeit der hydraulischen Förderung zu erhöhen.

Diese Ergänzungen haben weitgehend dazu beigetragen, daß in der näheren Vergangenheit mehrere, auf dem Rohrkammersystem beruhende Förderanlagen aufgebaut worden sind, die mit voller Betriebssicherheit und mit einer langen Lebensdauer funktionieren.

Obwohl mit der oben erwähnten Ergänzung je Dosierkammer neben den vier Hauptabsperrorganen zwei kleinere Absperrorgane in die Anlage eingebaut werden, änderte sich die "Dosierungsfunktion" nicht; die Funktion kann nur durch die koordinierte Operation mehrerer Absperrorgane erreicht werden. Trotzdem haben die zusätzlichen Absperrorange die Betriebsbereitschaft der Dosiereinheit mit der Rohrkammer bedeutend erhöht; es wurde die Verwendung eines höheren entleerenden-fördernden Druckes ermöglicht, wodurch das System selbst entwickelt worden ist.

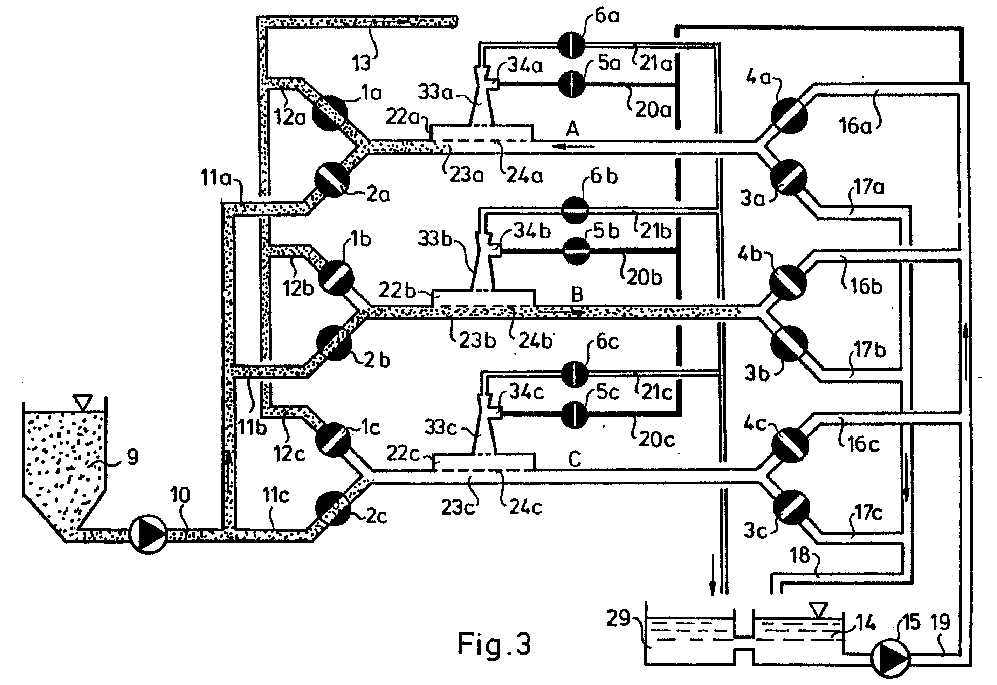

Fig. 3 stellt eine Dreikammerversion hydraulischen Förderanlage mit Verdichtungskammer nach der ungarischen Patentanmeldung 3595/84 dar.

Der konstruktive Aufbau dieser Lösung zeigt noch eine gewisse Ähnlichkeit mit dem Aufbau nach Reichl-Jones, insoweit als der Gemischsammelbehälter 9 und das Flüssigkeitsspeicherbecken 14 auch hier vorhanden sind und die Dosierräume 23a-23c der Dosierkammer A, B und C über die Anschlußleitungen 11a-11c, 12a-12c, 16a-16c, 17a-17c mit der Trübefüllpumpe 10, der entleerenden-fördernden Flüssigkeitspumpe 15, mit der das Gemisch fördernden Rohrleitungen 13, sowie mit dem Flüssigkeitsspeicherbecken 14 in Verbindung stehen, desweiteren in den Anschlußleitungen je ein, d.h. je Dosierkammer vier Absperrorgane 1a-1c, 2a-2c, 3a-3c, 4a-4c eingebaut sind.

Der Unterschied zeigt sich in der Funktion der Dosierkammer A, B, C und in der diese Funktion fördernden konstruktiven Gestaltung. Im Interesse der Verdichtungsfunktion sind die Dosierkammern A, B, und C mit einem geteilten Rauminhalt ausgestaltet; so sind diese in den das Gemisch aufnehmenden Dosierraum 23a-23c und in den das Filtrat aufnehmenden Flüssigkeitsraum 22a-22c unterteilt, zwischen die eine Filterfläche 24a-24c eingesetzt ist.

An den Flüssigkeitsraum 22a-22c der Dosierkammern A, B, C sind Flüssigkeitsstrahlpumpen 33a-33c mit ihrer Saugseite angeschlossen, wobei die Druckseiten über die Leitung 21a-21c mit dem kleinen Durchmesser und das Absperrorgan 6a-6c mit einem Filtratsammelbecken 29 verbunden sind. Treibdüsen 34a-34c der Flüssigkeitsstrahlpumpen 33a-33c stehen mit der Druckseite der entleerenden-fördernden Flüssigkeitspumpe 15 in Verbindung, und zwar über die Leitung 20a-20c mit dem kleinen Durchmesser und das sich darin befindende Absperrorgan 5a-5c.

In dem beschriebenen Fall steht die Dosierkammer A unter Entleerung, während die Dosierkammer B aufgefüllt wird. Während der Auffüllung tritt ein Teil der Flüssigkeitsmenge aus dem Gemisch von dem Dosierraum 23b in den Flüssigkeitsraum 22b zwangsweise ein, wonach die Flüssigkeit mit Hilfe der Flüssigkeitsstrahlpumpe 33b in das Filtratsammelbecken 29 gelangt, oder zwecks anderweitiger Verwendung zu dem gewünschten Ort geführt wird. Währenddessen hört die Strömung in der Dosierkammer C auf und in dem Dosierraum 25c steht die reine Flüssigkeit unter dem Druck der Trübefüllpumpe 10.

Nachdem der Dosierraum 23a der Dosierkammer A entleert und der Dosierraum 23b der Dosierkammer B mit dem konzentrierten Gemisch aufgefüllt worden sind, beginnt die Steuereinheit die in den Anschlußleitungen 11a-11c, 12a-12c, 16a-16c, 17a-17c installierten Absperrorgane 1a-1c, 2a-2c, 3a-3c, 4a-4c sowie die Absperrorgane 5a-5c, 6a-6c, die in den am Flüssiggkeitsraum 22a-22c der Dosierkammern A, B, C angeschlossenen Leitungen 20a-20c, 21a-21c mit kleinerem Durchmesser der Flüssigkeitsstrahlpumpen 33a-33c angeordnet sind, in der angegebenen Reihenfolge zu betätigen; nach der Beendigung der schließenden-öffnenden Arbeitsgänge beginnt die Trübefüllpumpe 10 den Dosierraum 23c der Dosierkammer C mit dem Gemisch aufzufüllen, während die entleerende-fördernde Flüssigkeitspumpe 15 die Entleerung des konzentrierten Gemisches aus dem Dosierraum 23b der Dosierkammer B in Gang setzt, während in dem Dosierraum 23a der Dosierkammer A der entleerende-fördernde Strom stillgesetzt ist.

Die Steuereinheit ist so zu programmieren, daß noch bevor der Dosierraum 23b der mit dem konzentrierten Gemisch aufgefüllten Dosierkammer B entleert wird, die Rückspülung der zwischen dem Dosierraum 23b und dem Flüssigkeitsraum 22b vorhandenen Filterfläche 24b stattfindet; zu diesem Arbeitsschritt ist das in der Abführleitung 21b der Flüssigkeitsstrahlpumpe 33b vorhandene Absperrorgan 6b zu verschließen. Durch diesen Arbeitsgang wird gleichzeitig in dem Dosierraum 23b der Druckunterschied zwischen Füllung und Entleerung ausgeglichen, wonach die das Öffnen bzw. das Schließen erzielenden Arbeitsgänge für die Absperrorgane 1b, 2b, 3b, 4b in den Anschlußleitungen 11b, 12b, 16b, 17b in Gang gesetzt werden können, damit in dem Dosierraum 23b der Dosierkammer B der Entleerungsstrom, und in dem Dosierungsraum 23c der Dosierkammer C der Füllstrom in Gang gesetzt werden können.

Selbstverständlich muß das Programm der Steuereinheit dafür sorgen, daß der Füllstrom und der Entleerungsstrom bei jedem Kammerwechsel kontinuierlich sind.

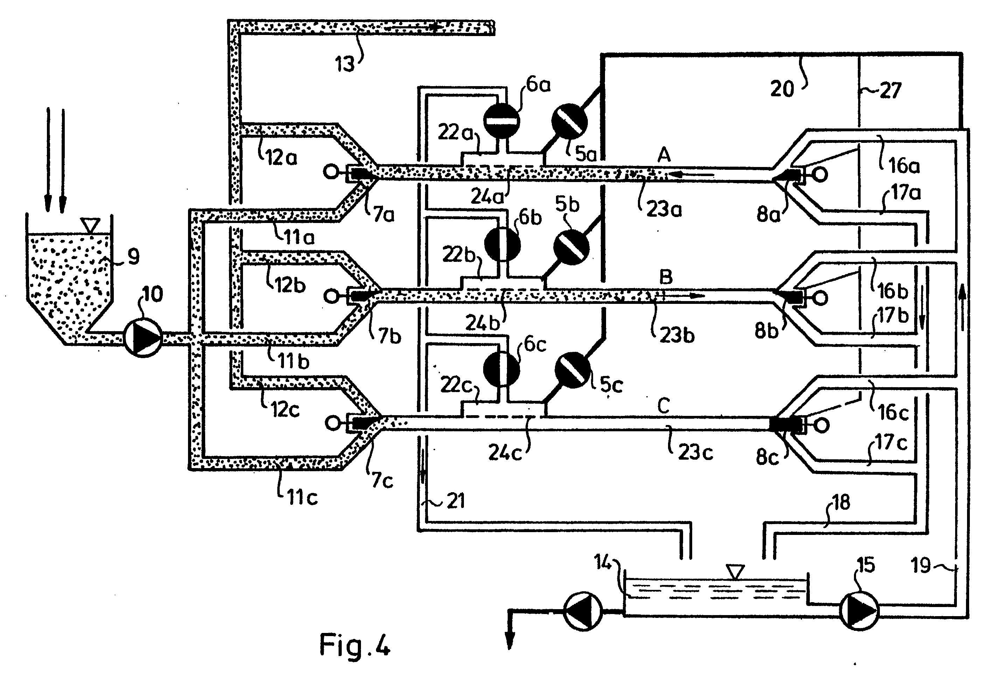

In Fig. 4 ist die der ungarischen Patentanmeldung 3673/84 entsprechende hydraulische Förderanlage mit Verdichtungskammer und Kammerverschluß dargestellt, bei der alle Vorteile der bisherigen Entwicklungen des Reichl-Jonesschen Grundgedankens, so die konstruktiven Voraussetzungen der "Dosierung" und der "Verdichtungsfunktion" aufrechterhalten sind, aber die Anlage dadurch vereinfacht ist, daß je Dosierkammer nur zwei Absperrorgane einzubauen sind und nicht in die Anschlußleitung, sondern in die Dosierkammer; diese Absperrorgane ermöglichen das Herstellen und das Trennen der Verbindung mit der Dosierkammer. Diese Absperrorgane - Kammerverschlüsse - sind spezial ausgestaltete, in dem Rohr eingebaute, um ihre Längsachse verdrehbare Armaturen, die an den beiden Enden der Dosierkammern angeordnet sind, ihre Drehachse ist mit der Achse der Dosierkammern übereinstimmend, sie können beliebig, in Abhängigkeit von den jeweiligen Umständen betätigt werden.

Bei der in Fig. 4 gezeigten Dreikammer-Förderanlage wird das Gemisch in dem Gemischsammelbehälter 9 gesammelt. An den Gemischsammelbehälter 9 ist die Saugseite der Trübefüllpumpe angeschlossen, während die Druckseite über die Anschlußleitungen 11a-11c mit den Dosierkammern A, B, C kommuniziert.

Außerdem kommunizieren die Dosierkammern A, B, C über die Anschlußleitungen 12 - 12c mit der das Gemsich fördernden Rohrleitung 13, über die Anschlußleitungen 16a - 16c und die Druckleitung 19 mit der Druckseite der entleerenden-fördernden Flüssigkeitspumpe 13, desweiteren über die Anschlußleitungen 17a - 17c und die Ausflußleitung 18 mit dem Flüssigkeitsspeicherbecken 14. Die entleerende-fördernde Flüssigkeitspumpe 15 ist mit ihrer Saugseite mit dem Flüssigkeitsspeicherbecken 14 verbunden. An beiden Enden der Dosierkammern A, B, C sind mit einer mit der Achse der Dosierräume 23a - 23c koinzidierenden Drehachse die verdrehbaren Kammerverschlüsse 7a, 7c, 8a - 8c eingebaut, von denen die Kammerverschlüsse 7a - 7c über die Anschlußleitungen 11a - 11c bzw. 12a - 12c die Verbindung zwischen den Dosierräumen 23a - 23c und der Trübefüllpumpe 10 bzw. der das Gemisch fördernden Rohrleitung 13 herstellen, während die Kammerverschlüsse 8a - 8c die Verbindung über die Anschlußleitungen 16a - 16c bzw. 17a - 17c mit den Dosierräumen 23a - 23c und der entleerenden-fördernden Flüssigkeitspumpe 15 bzw. dem Flüssigkeitsspeicherbecken 14 zustandebringen. Mit Hilfe der Kammerverschlüsse 7a - 7c, 8a - 8c können gleichzeitig beide Anschlußleitungen 11a, 12a, 11b, 12b, 11c, 12c; 16b, 17b; 16c, 17c von dem Dosierraum 23a - 23c abgetrennt werden. Die Leckwasseranschlusstellen der Kammerverschlüsse 7a - 7c, 8a - 8c kommunizieren über die Leitung 27 mit dem kleinen Durchmesser mit der Druckseite der Flüssigkeitspumpe 15.

In dem geschilderten Fall steht die Dosierkammer A unter Entleerung, während die Dosierkammer B aufgefüllt wird. Während der Auffüllung fließt ein Teil der Flüssigkeit aus dem Gemisch zwangsläufig aus dem Dosierraum 23b über die Filterfläche 24b, unter der Wirkung des Druckunterschieds zwischen dem Flüssigkeitsraum 22b und dem Dosierraum 23b in den Flüssigkeitsraum 22b und gelangt über das geöffnete Absperrorgan 6b sowie die Leitung 21 mit dem kleinen Druchmesser in das Flüssigkeitsspeitsspeicherbecken 14. In der Dosierkammer C wird die Strömung stillgesetzt und in dem Dosierraum 23c steht die entleerende-fördernde Flüssigkeit unter dem Druck der Trübefüllpumpe 10.

Nachdem der Dosierraum 23a der Dosierkammer A entleert und der Dosierraum 23b der Dosierkammer B mit dem konzentrierten Gemisch aufgefüllt worden sind, beginnt die Steuereinheit die Kammerverschlüsse 7a - 7c, 8a - 8c, sowie die Absperrorgane 5a - 5c, 6a - 6c, die in den am Flüssigkeitsraum 23a - 23c der Dosierkammer A - C angeschlossenen Leitungen 20, 21 mit dem kleineren Durchmesser angeordnet sind, in der vorgegebenen Reihenfolge zu betätigen; nach dem vorbestimmten Verdrehen der Kammerverschlüsse 7a - 7c, 8a - 8c bzw. Beendigung der öffnenden-schließenden Operationen der Absperrordgane 5a - 5c, 6a - 6c beginnt die Trübefüllpumpe 10 den Dosierraum 23c der Dosierkammer C mit dem Gemisch aufzufüllen, während die entleerende-fördernde Flüssigkeitspumpe 15 das konzentrierte Gemisch aus dem Dosierraum 23b der Dosierkammer B zu entleeren beginnt, und in dem Dosierraum 23a der Dosierkammer A die entleerende-fördernde Strömung stillgesetzt wird.

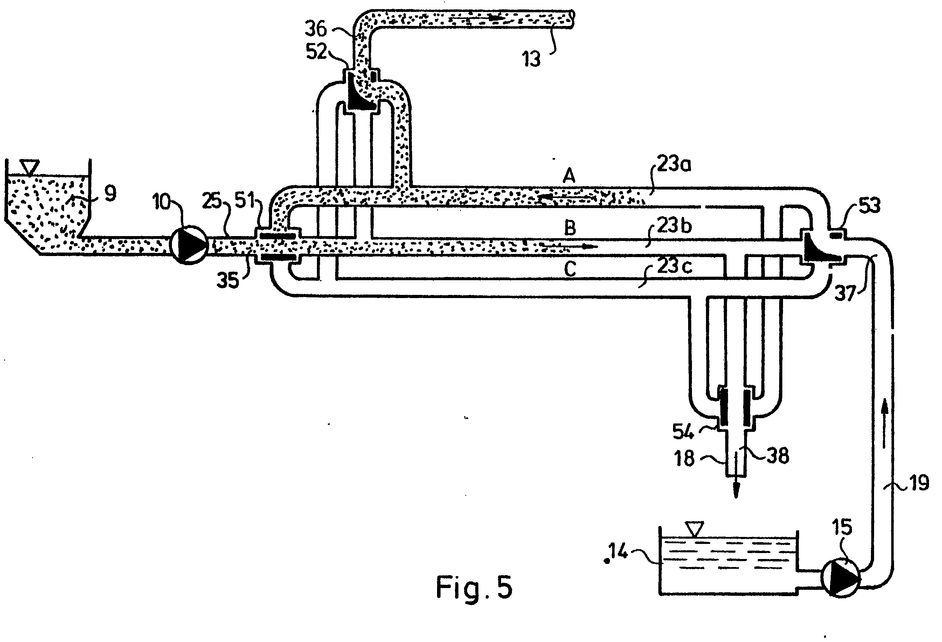

Fig. 5 stellt eine einfache, nur die Funktion der Dosierung erfüllende Ausführungsform der erfindungsgemäßen hydraulischen Förderanlage mit drei Dosierkammern dar. Die Druckseite der mit ihrer Saugseite an dem Gemischsammelbehälter 9 angeschlossenen Trübefüllpumpe 10 steht über eine auffüllende Druckleitung 25, ein Strömungsumstellorgan 51, über die Dosierräume 23a, 23b, 23c der Dosierkammern A, B, C und ein Strömungsumschaltorgan 54 mit der Ausflußleitung 18 in Verbindung, die in das Flüssigkeitsspeicherbecken 14 mündet. Die mit der Saugseite an dem Flüssigkeitsspeicherbecken 14 angeschlossene Flüssigkeitspumpe 15 ist über die Druckleitung 19, ein Strömungsumstellorgan 53, die Dosierräume 23a, 23b, 23c und ein Strömungsumstellorgan 52 mit der das Gemisch fördernden Rohrleitung 13 verbunden. Die Strömungsumstellorgane 51 - 54 weisen den gleichen Aufbau auf, sie können einsinnig gedreht werden. Jedes einzelne Strömungsumstellorgan verbindet die angeschlossene auffüllende Druckleitung 25, die das Gemisch fördernde Rohrleitung 13, die Ausflußleitung 18 bzw. die entleerende Druckleitung 19 gleichzeitig mit einem oder zwei der Dosierräume 23a - 23c. Der an der Druckseite der Trübefüllpumpe 10, in der auffüllenden Druckleitung ausgestaltete Raum wird als unter Fülldruck stehender Raum 35 bezeichnet, der Innenraum der das Gemisch fördernden Rohrleitung 13 als unter Förderdruck stehender Raum 36, und der an der Druckseite der Flüssigkeitspumpe 15 vorhandene Innenraum der entleerenden Druckleitung 19 als unter Entleerungsdruck stehender Raum 37. Der Innenraum der Ausflußleitung 18 wird als Raum 38 mit Ausflußdruck bezeichnet.

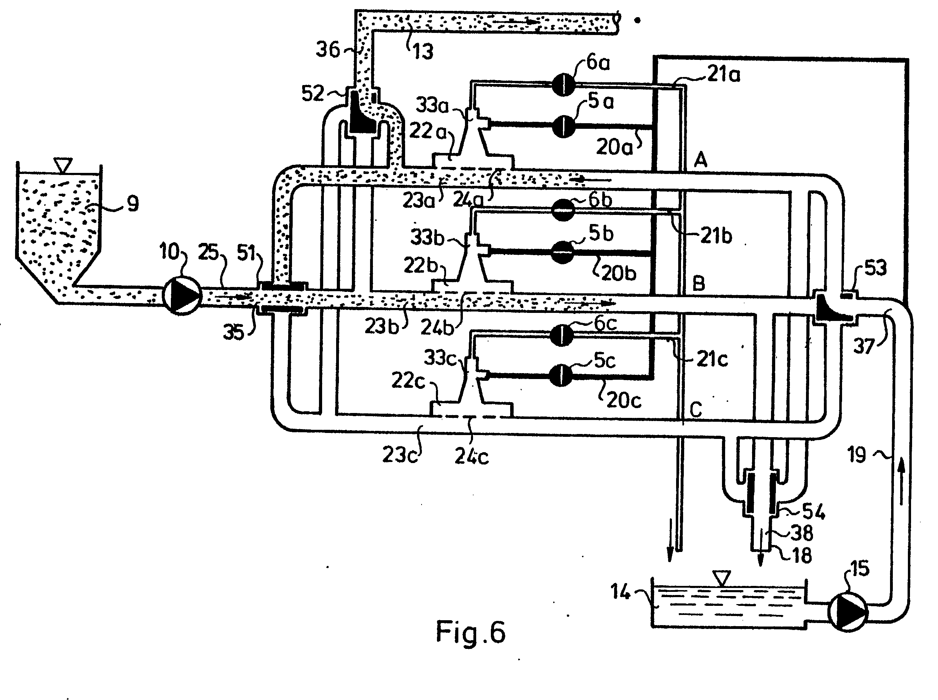

Fig. 6 stellt die mit Verdichtungskammer ausgestaltete Version der erfindungsgemäßen Anlage dar. In diesem Fall stimmt der die Dosierungsfunktion realisierende Teil der Anlage mit jenem nach Fig. 5 überein, während zur Erfüllung der Verdichtungsfunktion die im Zusammenhang mit Fig. 3 bereits ausführlich beschriebene Ausführungsform mit der Wasserstrahlpumpe verwendet wird.

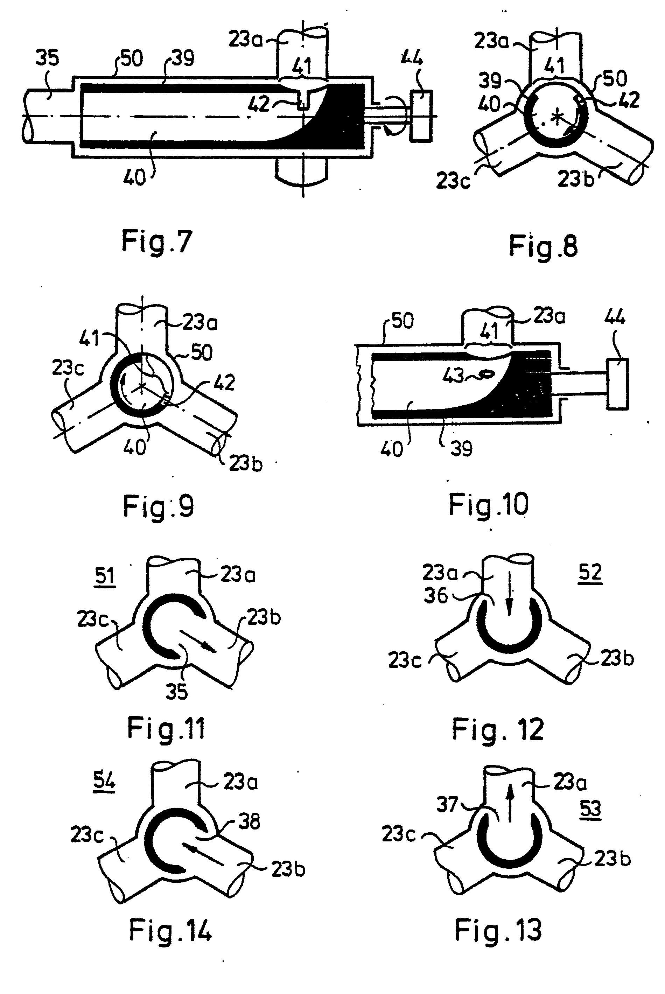

Fig. 7 stellt den Längsschnitt des über drei Umschaltungsmöglichkeiten verfügenden Strömungsumstellorgans 51 dar. An dem Mantel des in einem Gehäuse 50 angeordneten, verdrehbaren, zylindrischen, an dem einen Ende offenen, am anderen Ende jedoch geschlossenen hohlen Innenteils ist eine Öffnung 41 ausgestaltet. Der Innenraum 40 des Innenteils 39 bildet einen das offene Ende des Innenteils - d.h. den unter Fülldruck stehenden Raum 35 - mit der Öffnung 41 verbindenden Kanal. An dem in Drehrichtung vorlaufenden Rand der Öffnung 41 ist ein gegenüber der Öffnung 41 kleiner dimensionierter Spalt 42 ausgebildet. Der Innenteil 39 wird von einem hier symbolisch dargestellten Getriebe 44 mit vorzugsweise veränderlicher Drehzahl in Drehbewegung gesetzt. Das Getriebe 44 wird vorteilhaft über eine damit verbundene zentrale Steuer- und Regeleinheit gesteuert.

Fig. 8 zeigt den Querschnitt des Strömungsumstellorgans 51 nach Fig. 7. Wie aus der Figur ersichtlich, sind die Dosierräume 23a - 23c am Umfang des Umstellorgans 50 um 60° gleichmäßig gegeneinander versetzt und ist der Innenraum 40 des Innenteils 39 in der gezeigten Stellung über die Öffnung 41 mit dem Dosieraum verbunden und von den Dosierräumen 23b und 23c getrennt. Wenn nun der Innenteil 39 in Richtung des Pfeils verdreht wird, kommt zuerst über den Spalt 42 die Verbindung auch zu dem Dosieraum 23b zustande. Auf diese Weise wird über den Spalt 42 der Druckunterschied zwischen den Dosierräumen 23a und 23b langsam ausgeglichen. Wenn nun der Innenteil 39 weiter verdreht wird, entsteht die in Fig. 9 dargestellte Stellung, in der der Innenraum 40 - der unter Fülldruck stehende Raum 35 - über die Öffnung 41 mit den Dosierräumen 23a und 23b gleicherweise verbunden ist.

Fig. 10 zeigt eine weitere Ausführungsmöglichkeit des Strömungsumstellorgans; gegenüber der in Fig. 7 gezeigten Ausführungsform besteht der Unterschied darin, daß an dem Mantel des Innenteils 39 anstatt des Spaltes 42 ein Loch 43 in der Nähe des in Drehrichtung vorlaufenden Randes der Öffnung 41 ausgebildet ist.

Fig. 11 bis 14 zeigen die Position der Strömungsumstellorgane 51 - 54 in dem Betriebszustand nach Fig. 5 und 6. Der besseren Übersicht halber haben wir nur die an den Strömungsumstellorganen angeschlossenen Dosierräume 23a - 23c, bzw. den unter Fülldruck stehenden Raum 35, den unter Förderdruck stehenden Raum 36 und den unter Entleerungsdruck stehenden Raum 37, sowie den unter Ausflußdruck stehenden Raum 38 dargestellt; die Strömungsrichtung der Flüssigkeit ist durch Pfeile angegeben. So z.B. verbindet das Strömungsumstellorgan 51 in Fig. 11 den unter Fülldruck stehenden Raum 35 mit dem Dosieraum 23b, wobei das gemisch von dem Raum 35 unter Fülldruck in den Dosierraum 25b strömt.

Die Wirkungsweise der erfindungsgemäßen hydraulischen Förderanlage wird anhand der nur die Dosierungsfunktion erfüllenden Anlage mit Dosierkammer nach Fig. 5 und der neben der Dosierfunktion auch die Verdichtungsfunktion erfüllenden Anlage mit Dosierkammer nach Fig. 6, sowie mit Hilfe der die Strömungsumstellorgane darstellenden Fig. 7 bis 14 ausführlich erläutert.

In dem in Fig. 5 und 6 dargestellten Fall wird die Dosierkammer A in der hydraulischen Förderanlage entleert, während die Dosierkammer B aufgefüllt wird und in der Dosierkammer C keine Strömung vorliegt. Die Position der Strömungsumstellorgane 51 - 54 ist aus den Fig. 11 - 14 ersichtlich.

Die Trübefüllpumpe 10 saugt das Gemisch aus dem Gemischsammelbehälter 9 und preßt es über das in der auffüllenden Druckleitung 25 angeordnete, über drei Umschaltungsmöglichkeiten verfügende Strömungsumstellorgan in den Dosierraum 23b der Dosierkammer B ein, während das strömende Gemisch die in Dossieraum 23b vorhandene reine Flüssigkeit über das in der Ausflußleitung 18 eingebaute Dreiweg-Strömungsumstellorgan 54 vor sich herschiebt und in das Flüssigmeitsspeicherbecken 14 verdrängt.

Währenddessen preßt die entleerende-fördernde Flüssigkeitspumpe 15 über das in der Druckleitung 19 eingebaute Dreiweg-Strömungsumstellorgan 53 reine Flüssigkeit in den Dosierraum 23a der Dosierkammer A und verdrängt des eingespeiste Gemisch, das über das Strömungsumstellorgan 52 in die das Gemisch fördernde Rohrleitung 13 strömt.

In dieser Zeitspanne findet keine Strömung in dem Dosierraum 23c der Dosierkammer C statt, der Dosierraum 23c ist mit reiner Flüssigkeit aufgefüllt und steht unter dem Druck der Trübefüllpumpe 10.

Die Ausführungsform nach Fig. 6 ist mit der Verdichtungskammer und der Wasserstrahlpumpe versehen. Bei dieser Version strömt ein Teil des Flüssigkeitsinhalts des Gemisches während der Auffüllung des Dosierraums 23b durch die Filterfläche 24b und gelangt in den Flüssigkeitsraum 22b, woraus die Flüssigkeit mit Hilfe der Flüssigkeitsstrahlpumpe 35b über die Leitung 21b mit dem kleinen Druchmesser in das Flüssigkeitsspeicherbecken 14 gefördert wird. Das bedeutet, daß das Gemisch in dem Dosierraum 23b verdichtet wird.

Nachdem der Dosierraum 23b der Dosierkammer B volkommen aufgefüllt und der Dosierraum 23a der Dosierkammer A vollkommen entleert worden sind, wird die sogenannte Umstelloperaiton durchgeführt, die das Verstellen der in der hydraulischen Förderanlage vorhandenen Strömungsumstellorgane und Absperrorgane in einer im voraus bestimmten Reihenfolge bedeutet. Die Reihenfolge der Betätigung kann unterschiedlich sein, eine mögliche Version ist wie folgt:

I. Takt: das Strömungsumstellorgan 51 dreht sich und öffnet den Dosierraum 23c und schließt den Dosierraum 23b.

Der zylindrische Innenteil 39 des Strömungsumstellorgans 51 dreht sich langsam, während der Druckausgleich zwischen dem Dosierraum 23c und dem Raum 35 unter Fülldruck über den Spalt 42 oder das Loch 43 stattfindet, wonach der Füllstrom aus dem Dosierraum 23b allmählich in den Dosierraum 23c überströmt.

2. Takt: das Strömungsumstellorgan 54 dreht sich und schließt den Dosierraum 23b.

Der zylindrische Innenteil 9 des Strömungsumstellorgans 54 dreht sich mit einem Antrieb höher Drehzahl, wodurch eine vollkommene Verbindung zwischen dem Dosierraum 23c und dem Raum unter dem Ausflußdruck 38 entsteht, der Füllstrom wird über das umstellorgane 51 vollständig auf den Dosierraum 23c umgestellt, während der Dosierraum 23b vollständig geschlossen wird.

3. Takt: das Strömungsumstellorgan 52 dreht sich langsam, so daß der Dossierraum 23a teilweise geschlossen wird und der Dosierraum 23b teilweise geöffnet wird.

Der zylindrische Innenteil 39 des Strömungsumstellorgans 53 dreht sich, der Druckunterschied zwischen dem Dosierraum 23b und dem Raum 37 unter Entleerungsdruck wird über den Spalt 42 oder das Loch 43 ausgeglichen und der Innenteil 39 dreht sich weiter. Die Drehung kann von einem Getriebe mit höherer Drehzahl angetrieben werden.

Die Drehung der Strömungsumstellorgane wird nach den öffnenden-schließenden Arbeitsgängen beendet. Nach Beendigung der Umstellung werden die Auffüllung des Dosierraums 23c der Dosierkammer C und die Entleerung des Dosierraumes 23b der Dosierkammer B eingeleitet, während in dem Dosierraum 23a der Dosierkammer die Strömung zum Stillstand gebracht wird.

Bei der hydraulischen Förderanlage nach Fig. 6 werden die Umstellungsarbeitsgänge durch enstprechende Betätigungen der Absperrorgane 5a - 5c, 6a - 6c ergänzt, von welchen im Zusammenwirken mit den Flüssigkeitsstrahlpumpen 33a - 33c, die durch die Filterfläche 24a - 24c hindurchfließende Flüssigkeit abgeleitet wird. Diese stimmt mit den im Zusammenhang mit Fig. 3 früher geschilderten Operationen überein.

Die Erfindung ist keinesfalls auf die in den Figuren gezeigten Ausführungsbeispiele beschränkt. Die Dosierkammern und die Strömungsumstellorgane können in anderer Weise angeordnet sein; die Füllströmung und die Entleerungs- und Förderströmung können in den Dosierkammern einwegig sein. Eine Ausführung ist nur mit drei Dosierkammern möglich; für die kontinuierliche Füll- und Entleerungsströmung muß man in allen Fällen Sorge tragen.

**Patentansprüche**

1. Verfahren zum hydraulischen Fördern eines Gemisches aus festen Materialkörnern und Flüssigkeit, in dessen Verlauf in der über Räume (35, 36, 37, 38) unter Fülldruck, Förderdruck, Entleerungsdruck und Ausflußdruck und über drei Dosierräume (23a, 23b, 23c) verfügenden hydraulischen Förderanlage über die drei Dosierräume nach erfolgtem Ausgleich des Druckes der unter Fülldruck stehende Raum (35) mit dem Raum (38) unter Ausflußdruck, und der Raum (37) unter Entleerungsdruck mit dem unter Förderdruck stehenden Raum (36) in vorbestimmter Reihenfolge verbunden werden, während in den Dosierraum (23a, 23b, 23c) unter Fülldruck ein Gemisch eingefüllt wird, wonach das Gemisch unter Entleerungsdruck in die Förderleitung (13) weitergeleitet wird, dadurch gekennzeichnet, daß der Ausgleich des Druckunterschieds zwischen den Dosierräumen (23a, 23b, 23c), dem unter Fülldruck stehenden Raum (35), dem unter Förderdruck stehenden Raum (36), dem unter Ausflußdruck stehenden Raum (38) und dem Raum (37) unter Entleerungsdruck, sowie die Verbindung zwischen dem Raum (35) unter Fülldruck, dem Raum (36) unter Förderdruck, dem Raum (38) unter Ausflußdruck, dem Raum (37) unter Entleerungsdruck, sowie den Dosierräumen (23a, 23b, 23c) durch einsinnige und mit veränderlicher Geschwindigkeit vorgenommene Drehbetätigung jeweils eines Strömungsumstellorgans (51, 52, 53, 54) erreicht werden, welches den Raum (35) unter Fülldruck, den Raum (36) unter Förderdruck, den Raum (37) unter Entleerungsdruck und den Raum (38) unter Ausflußdruck einzeln, mit einem oder mehreren der Dosierräume (23a, 23b, 23c) gleichzeitig verbindet.

2. Vorrichtung zum hydraulischen Fördern eines Gemisches aus festen Materialkörnern und Flüssigkeit, in der die Druckseite der mit ihrer Saugseite an einem Gemischsammelbehälter (9) angeschlossenen Trübefüllpumpe (10) über eine auffüllende Druckleitung (25), drei Dosierräume (23a, 23b, 23c) und eine Ausflußleitung (18) mit einem Flüssigkeitsspeicherbecken (14) verbunden ist und die Druckseite einer mit ihrer Saugseite an dem Flüssigkeitsspeicherbecken (14) angeschlossenen entleerenden-fördernden Flüssigkeitspumpe (15) über eine entleerende Druckleitung (19) und die Dosierräume (23a, 23b, 23c) mit der das Gemisch fördernden Rohrleitung (13) verbunden ist, dadurch gekennzeichnet, daß zwischen der auffüllenden Druckleitung (25), der das Gemisch fördernden Rohrleitung (13), der Ausflußleitung (18) und der entleerenden Druckleitung (19) einerseits und den Dosierräumen (23a, 23b, 23c) andererseits je ein über drei Umschaltungsstellungen verfügendes, vorzugsweise einsinnig verdrehbares Strömungsumstellorgan (51, 52, 53, 54) eingebaut ist, wobei über die Strömungsumstellorgane in deren Stellungen die auffüllende Druckleitung (25), die das Gemisch fördernde Rohrleitung (13), die Ausflußleitung (18) bzw. die entleerende Druckleitung (19) einzeln mit einem oder zwei der Dosierräume (23a, 23b, 23c) gleichzeitig verbunden sind.

3. Vorrichtung nach Anspruch 2, dadurch gekennzeichnet, daß die Strömungsumstellorgane (51, 52, 53, 54) einen verdrehbaren hohlzylindrischen Innenteil (39) aufweisen, an dessen Mantel eine Öffnung (41) ausgebildet ist und dessen Innenraum (40) in den Stellungen der Umschaltorgane einerseits mit der auffüllenden Druckleitung (25), mit der fördernden Rohrleitung (13), mit der Ausflußleitung 18) bzw. mit der entleerenden Druckleitung (19), und andererseits über die Öffnung (41) gleichzeitig mit einem oder zwei Dosierräumen (23a, 23b, 23c) in Verbindung steht.

4. Vorrichtung nach Anspruch 3, dadurch gekennzeichnet, daß in dem Mantel des zylindrischen Innenteils (39) des Strömungsumstellorgans (51, 52, 53, 54), an dem in Drehrichtung vorlaufenden Rand der Öffnung (41) ein gegenüber der Öffnung (41) kleinerer Spalt (42) oder ein Loch (43) ausgebildet ist.

5. Vorrichtung nach einem der Ansprüche 1 bis 4, dadurch gekennzeichnet, daß die Strömungsumstellorgane (51, 52, 53, 54) mit einem Antriebsgetriebe (44) mit veränderlicher Drehzahl versehen ist, das mit einer zentralen Steuer- und Regeleinheit verbunden ist.

## Revendications

1. Procédé pour le transport hydraulique d'un mélange de grains de matériaux solides et de liquide, au cours duquel on met en contact selon une séquence prédéterminée dans l'installation hydraulique de transport via des volumes (35, 36, 37, 38) sous pression de remplissage, de transport, de vidange et d'évacuation et via trois espaces de dosage (23a, 23b, 23c), dans ce dernier cas après achèvement de l'équilibrage de pression du volume (35) sous pression de remplissage avec le volume (38) sous pression d'évacuation et du volume (37) sous pression de vidange avec le volume (36) sous pression de transport, tandis qu'on introduit un mélange sous pression de remplissage dans les espaces de dosage (23a, 23b, 23c), le mélange étant ensuite amené sous pression de vidange dans la canalisation de transport (13), caractérisé en ce que la compensation de la différence de pression entre les espaces de dosage (23a, 23b, 23c), le volume (35) sous pression de remplissage, le volume (36) sous pression de transport, le volume (38) sous pression d'évacuation et le volume (37) sous pression de vidange, ainsi que la liaison entre le volume (35) sous pression de remplissage, le volume (36) sous pression de transport, le volume (38) sous pression d'évacuation, le volume (37) sous pression de vidange, ainsi que les espaces de dosage, sont réalisés chaque fois par la mise en rotation d'un organe de commutation d'écoulement unidirectionnel à vitesse variable (51, 52, 53, 54), qui relie simultanément le volume sous pression de remplissage (35), le volume sous pression de transport (36), le volume sous pression de vidange (37) et le volume sous pression d'évacuatioin (38), avec un ou plusieurs des espaces de dosage (23a, 23b, 23c).

2. Dispositif pour le transport hydraulique d'un mélange de grains de matériaux solides et de liquide, dans lequel le côté sous pression d'une pompe de remplissage pour liquide à forte turbidité (10) reliée par son côté d'aspiration à un récipient collecteur de mélange (9), est relié par une canalisation de remplissage (25), trois espaces de dosage (23a, 23b, 23c) et une canalisation d'évacuation (18) à un bassin de stockage de liquide (14), et le côté sous pression d'une pompe de liquide (15), de vidange et de transport, reliée par son côté d'aspiration au bassin de stockage de liquide, est relié par une canalisation de vidange (19) et les espaces de dosage (23a, 23b, 23c) avec la canalisation de transport du mélange (13), caractérisé en ce qu'entre la canalisation de remplissage (25), la canalisatioin (13) de transport de mélange, la canalasation d'évacuation (18) et la canalisation de vidange (19), d'une part, et les espaces de dosage (23a, 23b, 23c) d'autre part, sont disposés des organes de commutation d'écoulement rotatifs (51, 52, 53, 54), de préférence unidirectionnels, et présentant chacun trois positions de commutation, ces organes de commutation mettant simultanément en liaison dans ces positions la canalisation de remplissage (25), la canalisation de transport de mélange (13), la canalisation de transport de mélange (13), la canalisation d'évacuation (18) ou la canalisation de vidange (19) séparément avec un ou deux des espaces de dosage (23a, 23b, 23c).

3. Dispositif selon le revendication 2, caractérisé en ce que les organes de commutation d'écoulement (51, 52, 53, 54) comportent un élément intérieur cylindrique creux rotatif (39), dans l'enveloppe duquel est ménagée une ouverture (41), et dont l'espace intérieur (40) dans les positions des organes de commutation est mise en liaison, d'une part avec la canalisation de remplissage (25), la canalisation de transport (13), la canalisation d'évacuation (18) ou la canalisation de vidange (19), et d'autre part, par louverture (41), simultanément avec un ou deux espaces de dosage (23a, 23b, 23c).

4. Dispositif selon la revendication 3, caractérisé en ce que dans l'enveloppe de l'élément cylindrique intérieur (39) de l'organe de commutation d'écoulement (51, 52, 53, 54) est ménagée une fente (42) ou une lumière (43) plus petite que l'ouverture (41) au bord de cette ouverture et dans le sens de rotation.

5. Dispositif selon l'une des revendications 1 à 4, caractérisé en ce que les organes de commutation de l'écoulement (51, 52, 53, 54) est muni d'un moyen d'entraînement (44) à vitesse de rotation variable, qui est relié à une unité centrale de commande et de régulation.

## Claims

1. Method for conveying a mixture of granular solids and liquid hydraulically, during which chambers (35, 36, 37, 38) pressurized with filling pressure, feed pressure, emptying pressure and discharge pressure are connected by means of three dosing chambers (23a, 23b, 23c) of the hydraulically conveying machinery after equalization of the pressure in a manner such, that the chamber (35) pressurized with filling pressure is connected to the chamber (38) pressurized with discharge pressure, and the chamber (37) pressurized with emptying pressure is connected to the chamber (36) pressurized with feed pressure in a predetermined sequence, while a mixture pressurized with filling pressure is filled into the dosing chamber (23a, 23b, 23c), whereupon the mixture pressurized with emptying pressure is led further into the feed conduit (13), characterized in that the equalization of pressure between the dosing chambers (23a, 23b, 23c), the chamber (35) pressurized with filling pressure, the chamber (36) pressurized with feed pressure, the chamber (38) pressurized with discharge pressure, and the chamber (37) pressurized with emptying pressure, as well as between the connections between chamber (35) pressurized with filling pressure, the chamber (36) pressurized with feed pressure, the chamber (38) pressurized with discharge pressure, the chamber (27) pressurized with emptying pressure, as well as the dosing chambers (23a, 23b, 23c) is achieved by rotating one flow – reversing element (51, 52, 53, 54), respectively, in one direction only with various rotational speeds, which connects the chamber (35) pressurized with filling pressure, the chamber (36) pressurized with feed pressure, the chamber (37) pressurized with emptying pressure and the chamber (38) pressurized with discharge pressure, respectively, to one or more dosing chambers (23a, 23b, 23c) at the same time, respectively.

2. Apparatus for conveying a mixture of granular solids and liquid hydraulically, in which a slurry filling pump (10) connected to a mixture collectin container (9) with it's suction side is connected by means of a filling pressure conduit (25) with it's pressure side to three dosing chambers (23a, 23b, 23c) and a discharge conduit (18) being connected to a liquid storage basin (14), and an emptying liquid feed pump (15) connected to the liquid storage basin (14) with its suction side is connected with it's pressure side by means of an emptying pressure conduit (19) and the dosing chambers (23a, 23b, 23c) to a mixture feed conduit (13), characterized in that between the filling pressure conduit (25), the mixture feed conduit (13), the discharge conduit (18) an dthe emptying pressure conduit (19) on the one hand and the dosing chambers (23a, 23b, 23c) on the other hand one flow-reversing element (51, 52, 53, 54), respectively, preferably rotatable in one direction only and having three reversing positions is mounted, whereat by means of the flow – reversing elements in their positions, the filling pressure conduit (25), the mixture feed conduit (13), the discharge conduit (18) and the emptying pressure conduit (19), respectively, are connected to one or two of the dosing chambers (23a, 23b, 23c) at the same time, respectively.

3. Apparatus according to claim 2, characterized in that the flow – reversing elements (51, 52, 53 54) comprise an inner rotatable hollow cylinder member (39) having an opening (41) in it's outer wall and the inner chamber (40) in the positions of the reversing elements in on the one hand connected to the filling pressure conduit (25), to the mixture feed conduit (13), to the discharge conduit (18) and the emptying pressure conduit (19), respectively, and is on the other hand at the same time connected by means of the opening (41) to one or two dosing chambers (23a, 23b, 23c).

4. Apparatus according to claim 3, characterized in that the outer wall of the inner cylinder member (39) of the flow – reversing element (51, 52, 53, 54) comprises within the edge of the opening (41) extending in direction of rotation a split (42) or a hole (43) being smaller than the opening (41).

5. Apparatus according to one of the claims 1 to 4, characterized in that the flow – reversing elements (51, 52, 53 54) are provided with a variable power transmission for varying the speed of rotation, which is connected with a central control- and adjusting unit.

Fig.1

Fig.2

Fig.3

Fig. 4

Fig. 5

Fig.6

9  10  25  51  35  52  36  13

23c 23b 22c 24c 33c 22b 24b 23a 33b 24a 22a 33a

5c 6c 20c 5b 6b 20b 5a 6a 20a

20c 21c 20b 21b 21a

C  B  A

14  18 38 54  15  19  37  53

Fig.7

Fig.8

Fig.9

Fig.10

Fig.11

Fig. 12

Fig.14

Fig.13